# EUROPÄISCHE PATENTSCHRIFT

(11) **EP 3 312 811 B1**
(45) Veröffentlichungstag und Bekanntmachung des Hinweises auf die Patenterteilung: **17.06.2020**
(21) Anmeldenummer: 17197087.4
(22) Anmeldetag: 18.10.2017
(51) Int. Cl.: G08B 13/00, G08B 15/00, G08B 13/196

(54) **ABWEHREN EINER GEFÄHRDUNG**
PROTECTION AGAINST DANGER
PROCÉDÉ DE PRÉVENTION D'UNE MENACE

(30) Priorität: 20.10.2016 DE 102016120060
(43) Veröffentlichungstag der Anmeldung: 25.04.2018
(73) Patentinhaber: Deutsche Post AG, 53113 Bonn (DE)
(72) Erfinder: Wiechers, Ralph, 53508 Mayschoß (DE); Ibach, Christian, 53175 Bonn (DE)
(74) Vertreter: Cohausz & Florack

(56) Entgegenhaltungen:
- EP-A1- 1 496 484
- WO-A2-2009/147663
- JP-A- 2017 124 809
- US-A1- 2004 030 451
- US-A1- 2006 038 678

## Beschreibung

### Gebiet

Beispielhafte Ausführungsformen der Erfindung betreffen ein Verfahren zum Abwehren einer Gefährdung und/oder zum Veranlassen des Abwehrens einer Gefährdung. Ferner wird eine Steuervorrichtung, ein Computerprogramm und ein System offenbart.

### Hintergrund

Im Stand der Technik sind unter anderem unbemannte Fahrzeug mit einem Aufnahmefach zum Transport von einer oder mehreren Sendungen bekannt. Diese unbemannten Fahrzeuge können während des Transports der Sendung verschiedenen Gefährdungen wie beispielsweise einem möglichen Diebstahl der Sendung ausgesetzt sein. Aufgrund des begrenzten Bauraums und der begrenzten Komplexität der unbemannten Fahrzeuge, ist es jedoch nicht möglich, diese Fahrzeug mit geeigneten Mitteln zum Abwehren aller dieser Gefährdungen auszustatten, so dass im Falle einer Gefährdung häufig keine Möglichkeit besteht, diese erfolgreich abzuwehren. Darüber hinaus ist ein Gefahrenerkennungs- und abwehrsystem durch das Dokument EP1496484 bekannt, umfassend einen Detektor zum Erkennen einer Gefahr, ein Bewertungsmittel zum Bewerten der Gefahr, zwei Abwehrmittel zum Abwehren der Gefahr, eine Auswahlmittel zum auswählen eines der zwei Abwehrmittel entsprechend der Bewertung der Gefahr, sowie einen Aktuator zum Aktivieren des einen ausgewählten Abwehrmittels.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung wird ein Verfahren zum Abwehren einer Gefährdung und/oder zum Veranlassen des Abwehrens einer Gefährdung offenbart, wobei das Verfahren von einer Steuerungsvorrichtung ausgeführt wird, und wobei das Verfahren Folgendes umfasst:
- Erhalten mehrerer Sensorinformationen;
- Bestimmen zumindest teilweise abhängig von den erhaltenen Sensorinformationen, ob eine Gefährdung besteht;
- Aussenden und/oder Bewirken des Aussendens einer Unterstützungsangebotsanfragenachricht, wenn bestimmt wird, dass die Gefährdung besteht;
- Empfangen und/oder Bewirken des Empfangens zumindest einer ersten Unterstützungsangebotsnachricht von einer ersten Unterstützungsvorrichtung als Antwort auf die Unterstützungsangebotsanfragenachricht;
- Bestimmen zumindest teilweise abhängig von der empfangenen ersten Unterstützungsangebotsnachricht, ob eine erste Unterstützungsmaßnahme der ersten Unterstützungsvorrichtung zum Abwehren der Gefährdung geeignet ist; und
- Veranlassen der ersten Unterstützungsmaßnahme, wenn bestimmt wird, dass die erste Unterstützungsmaßnahme zum Abwehren der Gefährdung geeignet ist.

Gemäß der Erfindung wird ferner eine Steuerungsvorrichtung offenbart, wobei die Steuerungsvorrichtung Mittel eingerichtet zur Ausführung des erfindungsgemäßen Verfahrens oder jeweilige Mittel zur Ausführung der Schritte des erfindungsgemäßen Verfahrens umfasst.

Dabei können verschiedene Schritte optional von verschiedenen Mitteln ausgeführt werden.

Die Mittel der erfindungsgemäßen Steuerungsvorrichtung können Hardware- und/oder Software-Komponenten umfassen. Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen. Dementsprechend soll gemäß der Erfindung auch eine Steuerungsvorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Steuerungsvorrichtung zu veranlassen, das erfindungsgemäße Verfahren auszuführen.

Alternativ oder zusätzlich können die Mittel ferner eine oder mehrere Kommunikationsschnittstellen (z.B. eine oder mehrere drahtlose und/oder drahtgebundene Netzwerkadapter) und/oder eine oder mehrere Sensoren umfassen. Es versteht sich, dass die Steuerungsvorrichtung auch andere nicht aufgeführte Mittel umfassen kann.

Die erfindungsgemäße Steuerungsvorrichtung ist beispielsweise eine Steuerungsvorrichtung zum Abwehren einer Gefährdung und/oder zum Veranlassen des Abwehrens einer Gefährdung.

Gemäß der Erfindung wird ferner ein System offenbart, wobei das System zumindest eine erfindungsgemäße Steuerungsvorrichtung und eine oder mehrere Unterstützungsvorrichtungen umfasst.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die erfindungsgemäße Steuerungsvorrichtung) zu veranlassen, das erfindungsgemäße Verfahren auszuführen.

Das erfindungsgemäße Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Merkmale des erfindungsgemäßen Verfahrens, der erfindungsgemäßen Steuerungsvorrichtung, des erfindungsgemäßen Systems und des erfindungsgemäßen Computerprogramms - teilweise beispielhaft - beschrieben.

Eine Sensorinformation repräsentiert beispielsweise eine durch einen Sensor an der Position des Sensors erfasste Umgebungseigenschaften (z.B. einen Messwert einer an der Position des Sensors erfassbaren physikalischen oder chemischen Größe). Die Sensorinformationen repräsentieren beispielsweise durch verschiedene Sensoren (z.B. durch zumindest zwei verschiedene Sensoren) erfasste Umgebungseigenschaften.

Zum Beispiel können die Sensorinformationen zumindest teilweise durch das Erfassen von einer oder mehrere Umgebungseigenschaften durch einen oder mehrere Sensoren der Steuerungsvorrichtung erhalten werden. Alternativ oder zusätzlich kann das Erhalten der Sensorinformationen zumindest teilweise auch durch das Empfangen der Sensorinformationen durch eine drahtlose und/oder eine drahtgebundene Kommunikationsschnittstelle der Steuerungsvorrichtung erfolgen.

Unter einer Gefährdung soll beispielweise verstanden werden, dass eine bestimmte Wahrscheinlichkeit (z.B. mehr als 50 %, vorzugsweise mehr als 75 %, besonders vorzugsweise mehr als 90 %) einer Beschädigung (z.B. einer Funktionszerstörung und/oder Funktionsbeeinträchtigung) und/oder einer unberechtigten Verwendung (z.B. eines Diebstahls) eines Schutzguts besteht. Das Bestimmen zumindest teilweise abhängig von den erhaltenen Sensorinformationen, ob eine Gefährdung besteht, ergibt dementsprechend beispielsweise, dass eine Gefährdung besteht, wenn sich aus den erhaltenen Sensorinformationen ergibt, dass eine bestimmte Wahrscheinlichkeit einer Beschädigung und/oder einer unberechtigten Verwendung des Schutzguts besteht. Zum Beispiel kann für bestimmte Sensorinformationen vorgegeben sein, dass, wenn diese erhalten werden, eine bestimmte Wahrscheinlichkeit für eine Beschädigung und/oder eine unberechtigte Verwendung des Schutzguts besteht.

Als Ergebnis des Bestimmens, ob eine Gefährdung besteht, wird beispielsweise eine Gefährdungsinformation erhalten. Wie unten ausführlich offenbart wird, ist die Gefährdungsinformation beispielsweise indikativ für den Ort der Gefährdung, den Zeitpunkt der Gefährdung und/oder die Art der Gefährdung.

Die Unterstützungsangebotsanfragenachricht ist beispielsweise eingerichtet, Unterstützungsvorrichtungen, die die Unterstützungsangebotsanfragenachricht empfangen, zu veranlassen, mögliche Unterstützungsmaßnahmen zum Abwehren der Gefährdung in Form einer Unterstützungsangebotsnachricht anzubieten.

Die Unterstützungsangebotsanfragenachricht wird beispielsweise gemäß einer drahtlosen Kommunikationstechnik ausgesendet, wenn bestimmt wird, dass die Gefährdung besteht. Das Aussenden der Unterstützungsangebotsanfragenachricht erfolgt beispielsweise durch eine drahtlose Kommunikationsschnittstelle der Steuerungsvorrichtung. Unter dem Bewirken des Aussenden der Unterstützungsangebotsanfragenachricht soll beispielsweise verstanden werden, dass eine drahtlose Kommunikationsschnittstelle angesteuert wird, die Unterstützungsangebotsanfragenachricht auszusenden.

Zum Beispiel wird die Unterstützungsangebotsanfragenachricht in Form einer Broadcastnachricht (z.B. einer Rundrufnachricht) gemäß einer drahtlosen Kommunikationstechnik (z.B. einer lokalen Funknetztechnik) ausgesendet. Dies ist beispielsweise vorteilhaft, um die Unterstützungsangebotsanfragenachricht auch an unbekannte Unterstützungsvorrichtungen, die sich in Sendereichweite der drahtlosen Kommunikationsschnittstelle der Steuerungsvorrichtung befinden, kommunizieren zu können.

Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überregionale Funknetztechnik wie beispielsweise eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. In einigen beispielhaften Ausführungsformen der Erfindung soll unter einer drahtlosen Kommunikationstechnik auch eine Rundfunktechnik wie beispielsweise DAB (Digital Audio Broadcasting) und/oder DMB (Digital Mulitmedia Broadcasting) verstanden werden. Der DAB-Standard ist beispielweise unter dem Code EN 300 401 online von dem Europäische Institut für Telekommunikationsnormen (ETSI) erhältlich.

Ein weiteres Beispiel für eine drahtlose Kommunikationstechnik sind optische und/oder akustische Kommunikationstechniken. Eine optische Kommunikationstechnik basiert beispielsweise auf der Übertragung von Informationen durch optische Signale wie Infrarotsignale, Laser-Signale und/oder Flash-Muster. Die von der Infrared Data Association entwickelten und gepflegten Spezifikationen (z.B. IrPHY, IrLAP oder IrMC), die derzeit im Internet unter anderem unter www.irda.org erhältlich sind, stellen beispielsweise optische Kommunikationstechniken dar. Akustische Kommunikationstechniken basieren dementsprechend beispielsweise auf der Übertragung von Informationen durch akustische Signale wie Ultraschallsignale und/oder hörbare Geräusch- bzw. Signalmuster (z.B. durch Modulation einer Trägerwelle mit einer hörbaren oder nichthörbaren Grundfrequenz, z.B. im Hörschall- oder im Ultraschallfrequenzbereich). Akustische Signale können sowohl als analoge Signale als auch als digitale Signale übertragen werden.

Es versteht sich, dass die Unterstützungsangebotsanfragenachricht alternativ oder zusätzlich auch gemäß einer drahtgebundenen Kommunikationstechnik ausgesendet werden kann, wenn bestimmt wird, dass die Gefährdung besteht. Das Aussenden der Unterstützungsangebotsanfragenachricht erfolgt beispielsweise durch eine drahtgebundene Kommunikationsschnittstelle der Steuerungsvorrichtung.

Ein Beispiel für eine drahtgebundene Kommunikationstechnik ist eine lokale Netzwerktechnik wie Ethernet und/oder Universal Serial Bus (USB, z.B. USB Version 2.0 und/oder 3.0). Ethernet ist zum Beispiel in den Standards der IEEE-802.3-Familie spezifiziert. Die USB-Spezifikationen sind im Internet derzeit unter anderem unter www.usb.org erhältlich. Ein weiteres Beispiel für eine drahtgebundene Kommunikationstechnik sind überregionale Übertragungsstandards wie Integrated Services Digital Network (ISDN) und/oder Digital Subscriber Line (DSL). Die DSL-Spezifikationen wurden zumindest teilweise von der ITU-T entwickelt (z.B. ADSL, ADSL+, VDSL1 und VDSL2) und sind im Internet derzeit unter anderem unter www.itu.int erhältlich. ISDN wurde ebenfalls von der ITU-T entwickelt.

Die erste Unterstützungsangebotsnachricht wird beispielsweise gemäß einer drahtlosen oder drahtgebundenen Kommunikationstechnik (z.B. gemäß der Kommunikationstechnik, mit der die Unterstützungsangebotsanfragenachricht ausgesendet wurde) von der ersten Unterstützungsvorrichtung als Antwort auf die Unterstützungsangebotsanfragenachricht empfangen. Das Empfangen der ersten Unterstützungsangebotsnachricht erfolgt beispielsweise durch eine drahtlose oder drahtgebundene Kommunikationsschnittstelle der Steuerungsvorrichtung. Unter dem Bewirken des Empfangens der Unterstützungsangebotsnachricht soll beispielsweise verstanden werden, dass eine drahtlose Kommunikationsschnittstelle angesteuert wird, die Unterstützungsangebotsnachricht zu empfangen.

Die erste Unterstützungsangebotsnachricht ist beispielsweise indikativ für die erste Unterstützungsmaßnahme der ersten Unterstützungsvorrichtung. Dabei soll unter der ersten Unterstützungsmaßnahme der ersten Unterstützungsvorrichtung beispielsweise eine durch die erste Unterstützungsvorrichtung durchführbare Unterstützungsmaßnahme verstanden werden. Zum Beispiel ist die erste Unterstützungsvorrichtung eingerichtet, die erste Unterstützungsmaßnahme durchzuführen.

Eine Unterstützungsmaßnahme ist beispielsweise eine Aktion und/oder eine Abfolge von mehreren Aktionen.

Das Abwehren einer Gefährdung kann beispielsweise durch eine Unterstützungsmaßnahme erfolgen, durch die die Wahrscheinlichkeit der Beschädigung und/oder der unberechtigten Verwendung des Schutzguts verringert wird. Dementsprechend kann das Bestimmen, ob die erste Unterstützungsmaßnahme zum Abwehren der Gefährdung geeignet ist, ergeben, dass die erste Unterstützungsmaßnahme zum Abwehren der Gefährdung geeignet ist, wenn durch die erste Unterstützungsmaßnahme die Wahrscheinlichkeit der Beschädigung und/oder der unberechtigten Verwendung des Schutzguts verringert wird. Zum Beispiel kann für bestimmte Unterstützungsmaßnahmen vorgegeben sein, dass diese die Wahrscheinlichkeit für eine Beschädigung und/oder eine unberechtigte Verwendung des Schutzguts (z.B. für eine oder mehrere Arten von Gefährdung) verringern.

Wenn die Steuerungsvorrichtung Teil eines unbemannten Fahrzeugs ist, kann das Schutzgut beispielsweise das unbemannte Fahrzeug und/oder eine von dem unbemannten Fahrzeug transportierte Sendung sein. Eine Gefährdung kann in diesem Beispiel vorliegen, wenn eine bestimmte Wahrscheinlichkeit (z.B. mehr als 50 %, vorzugsweise mehr als 75 %, besonders vorzugsweise mehr als 90 %) für einen Diebstahl einer von dem unbemannten Fahrzeug transportierten Sendung besteht. Die Wahrscheinlichkeit für einen solchen Diebstahl kann beispielsweise durch eine Unterstützungsmaßnahme in Form einer Video- und/oder Bildüberwachung des unbemannten Fahrzeugs verringert werden. Zum Beispiel könnte der mögliche Dieb die Video- und/oder Bildüberwachung bemerken und deshalb von seinem Vorhaben ablassen.

Alternativ kann das Schutzgut zum Beispiel ein Gebäude und/oder eine in dem Gebäude befindliche Sendung sein, wenn die Steuerungsvorrichtung Teil eines Gebäudeautomatisierungssystems und/oder eines Alarmsystems ist. In diesem Beispiel kann eine Gefährdung vorliegen, wenn eine bestimmte Wahrscheinlichkeit (z.B. mehr als 50 %, vorzugsweise mehr als 75 %, besonders vorzugsweise mehr als 90 %) für einen Einbruch in das Gebäude besteht. Auch die Wahrscheinlichkeit für einen solchen Einbruch kann beispielsweise durch eine Unterstützungsmaßnahme in Form einer Video- und/oder Bildüberwachung des Gebäudes verringert werden.

Unter dem Veranlassen der ersten Unterstützungsmaßnahme soll beispielsweise verstanden werden, dass die Steuerungsvorrichtung die erste Unterstützungsvorrichtung veranlasst, die erste Unterstützungsmaßnahme durchzuführen.

Die Steuerungsvorrichtung kann also, um eine Gefährdung abzuwehren, nicht nur auf Mittel der Steuerungsvorrichtung (oder beispielsweise eines unbemannten Fahrzeugs, dessen Teil die Steuerungsvorrichtung ist) zugreifen, sondern auch Unterstützungsmaßnahmen der ersten von der Steuerungsvorrichtung verschiedenen Unterstützungsvorrichtung, die sich beispielsweise zufällig in der Nähe befindet, veranlassen. Die vorliegende Erfindung ermöglicht somit eine flexible und situationsabhängige Reaktion auf eine Gefährdung, ohne dass die Komplexität der Steuerungsvorrichtung (oder beispielsweise eines unbemannten Fahrzeugs, dessen Teil die Steuerungsvorrichtung ist) erhöht wird.

In beispielhaften Ausführungsformen der Erfindung wird das Verfahren durch die Steuerungsvorrichtung ausgeführt.

Alternativ oder zusätzlich kann auch vorgesehen sein, dass die Steuerungsvorrichtung eine oder mehrere von der Steuerungsvorrichtung verschiedene Vorrichtung (z.B. die erste Unterstützungsvorrichtung und/oder mehrere Unterstützungsvorrichtungen und/oder eine entfernte Servervorrichtung) veranlasst, zumindest einige Schritte des Verfahrens auszuführen. Zum Beispiel könnten mehrere Unterstützungsvorrichtungen ihre Unterstützungsmaßnahmen unter einander koordinieren.

Zum Beispiel kann das Bestimmen zumindest teilweise abhängig von der empfangenen ersten Unterstützungsangebotsnachricht, ob eine erste Unterstützungsmaßnahme der ersten Unterstützungsvorrichtung zum Abwehren der Gefährdung geeignet ist; und/oder das Veranlassen der ersten Unterstützungsmaßnahme, wenn bestimmt wird, dass die erste Unterstützungsmaßnahme zum Abwehren der Gefährdung geeignet ist, durch eine von der Steuerungsvorrichtung verschiedene Vorrichtung ausgeführt werden. Zum Beispiel kann die erste Unterstützungsvorrichtung diese Schritte ausführen. Alternativ oder zusätzlich können mehrere Unterstützungsvorrichtung diese Schritte gemeinsam in Form eines Aushandelns ausführen und zum Beispiel gemeinsam bestimmen, ob und welche Unterstützungsmaßnahme zum Abwehren der Gefährdung geeignet ist. Es versteht sich, dass die Schritte ferner auch durch eine entfernte Servervorrichtung (z.B. eine Servervorrichtung in einem Kontrollzentrum) ausgeführt werden können.

Dies ist beispielsweise vorteilhaft, um einen Prozessor der Steuerungsvorrichtung zu entlasten (z.B. wenn die Steuerungsvorrichtung beschädigt ist und/oder über eine geringere Prozessorleistung als die von der Steuerungsvorrichtung verschiedene Vorrichtung verfügt).

In beispielhaften Ausführungsformen der Erfindung stammen die Sensorinformationen von einem oder mehreren Sensoren (z.B. von mehreren verschiedenen Sensoren). Zum Beispiel sollen die Sensorinformationen als von einem oder mehreren Sensoren stammend verstanden werden, wenn die Sensorinformationen von diesen Sensoren bereitgestellt werden und/oder durch diese Sensoren erfasste Umgebungseigenschaften repräsentieren.

Zum Beispiel stammen die Sensorinformationen von einem oder mehreren der folgenden Sensoren: ein Temperatursensor (z.B. ein Thermometer, ein Thermoelement und/oder ein Thermowiderstand), ein Drucksensor, ein Helligkeitssensor, ein Bewegungssensor (z.B. ein Bewegungsmelder), ein akustischer Sensor (z.B. ein Mikrofon und/oder ein Geräuschsensor), ein Ultraschallsensor, ein optischer Sensor, ein Infrarotsensor, ein Lichtsensor (z.B. eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein chemischer Sensor (z.B. ein Gassensor), ein Glasbruchsensor, ein Bewegungssensor, ein Funksensor (z.B. eine drahtlose Kommunikationsschnittstelle und/oder ein WLAN-, NFC- und/oder Bluetooth-Sensor), ein Positionssensor (z.B. ein GPS-Sensor), ein Tür- und/oder Fenster-Öffnungssensor (z.B. ein Kontaktsensor) und/oder ein Beschleunigungssensor.

In beispielhaften Ausführungsformen der Erfindung erfolgt das Bestimmen, ob eine Gefährdung besteht, gemäß einer oder mehreren vorgegebenen Regeln und/oder gemäß einem Algorithmus zur Mustererkennung und/oder gemäß einem Algorithmus zum maschinellen Lernen.

Die vorgegebenen Regeln, können beispielsweise für den Fall, dass bestimmte Sensorinformationen erhalten werden, vorgeben, dass eine Gefährdung besteht. Ferner können die Regeln vorgeben, welcher Art eine Gefährdung ist, wenn bestimmt wird, dass eine Gefährdung besteht.

Bei der Mustererkennung kann es sich beispielsweise um eine statistische Mustererkennung handeln. Zum Beispiel wird dabei für die erhaltenen Sensorinformationen eine Wahrscheinlichkeit dafür bestimmt, dass eine Gefährdung besteht. Ferner wird beispielsweise für die erhaltenen Sensorinformationen eine Wahrscheinlichkeit dafür bestimmt, dass keine Gefährdung besteht. Zum Beispiel ergibt das Bestimmen, ob eine Gefährdung besteht, nur dann, dass eine Gefährdung besteht, wenn die Wahrscheinlichkeit dafür, dass eine Gefährdung besteht, höher ist als die Wahrscheinlichkeit dafür, dass keine Gefährdung besteht. Außerdem können beispielsweise die Wahrscheinlichkeiten für verschiedene Arten von Gefährdungen bestimmt werden, um die Art der Gefährdung bestimmen zu können. Algorithmen zur Mustererkennung basieren beispielsweise zumindest teilweise auf einem künstlichen neuronalen Netz, einer Support Vector Maschine, einer Clusteranalayse oder einer Kombination mehrerer (z.B. aller) dieser Techniken.

Das maschinelle Lernen kann beispielsweise in Form eines überwachten maschinellen Lernens (engl. supervised machine learning) erfolgen. Beim überwachten maschinellen Lernen wird das Ergebnis des Bestimmens, ob eine Gefährdung besteht, in einer Lernphase beispielsweise durch einen Vergleich der erhaltenen Sensorinformationen mit Referenzsensorinformationen überwacht und der Algorithmus angepasst, um eine Abweichung des Ergebnisses von einem Referenzergebnis, das den erhaltenen Sensorinformationen entsprechenden Referenzsensorinformationen zugeordnet ist, zu minimieren. Zum Beispiel geben die Referenzergebnisse das Ergebnis des Bestimmens, ob eine Gefährdung besteht und/oder welcher Art die Gefährdung ist, für bestimmte Referenzsensorinformationen vor. Die Referenzsensorinformationen und Referenzergebnisse können beispielsweise von einer oder mehreren anderen Steuerungsvorrichtungen stammen oder durch Testversuche erhalten werden. Algorithmen zum maschinellen Lernen können ebenfalls zumindest teilweise auf einem künstlichen neuronalen Netz, einer Support Vector Maschine, einer Clusteranalyse oder einer Kombination mehrerer (z.B. aller) dieser Techniken basieren.

In beispielhaften Ausführungsformen der Erfindung enthält die Unterstützungsangebotsanfragenachricht Gefährdungsinformationen zur Gefährdung, insbesondere zum Ort der Gefährdung, zum Zeitpunkt der Gefährdung und/oder zur Art der Gefährdung. Die Gefährdungsinformationen sind beispielsweise indikativ für den Ort der Gefährdung, den Zeitpunkt der Gefährdung und/oder die Art der Gefährdung.

Die Gefährdungsinformationen werden beispielsweise zumindest teilweise als Ergebnis des Bestimmens, ob eine Gefährdung besteht, erhalten und/oder bestimmt, wenn bestimmt wird, das eine Gefährdung besteht.

Durch die Gefährdungsinformationen wird den Unterstützungsvorrichtungen, die die Unterstützungsangebotsanfragenachricht empfangen, somit beispielsweise mitgeteilt, was benötigt wird, wo es benötigt wird und wann es benötigt wird. Dies ist beispielsweise vorteilhaft, damit Unterstützungsvorrichtungen, die die Unterstützungsangebotsanfragenachricht empfangen, bestimmen können, ob sie eine Unterstützungsmaßnahme zum Abwehren der Gefährdung anbieten können.

In beispielhaften Ausführungsformen der Erfindung enthält die Unterstützungsangebotsnachricht Unterstützungsinformationen zu einer möglichen Unterstützungsmaßnahme der ersten Unterstützungsvorrichtung, insbesondere zur Position der ersten Unterstützungsvorrichtung, zum Zeitpunkt der Unterstützungsmaßnahme und/oder zur Art der Unterstützungsmaßnahme. Die Unterstützungsinformationen sind beispielsweise indikativ für die Position der ersten Unterstützungsvorrichtung, den Zeitpunkt (z.B. den prognostizierten frühesten Zeitpunkt) der ersten Unterstützungsmaßnahme und/oder die Art der ersten Unterstützungsmaßnahme. Ferner können die Unterstützungsinformationen auch indikativ für eine Wirksamkeit (z.B. eine prognostizierte Wirksamkeit) der ersten Unterstützungsmaßnahme sein.

Zum Beispiel erfolgt das Bestimmen, ob die erste Unterstützungsmaßnahme zum Abwehren der Gefährdung geeignet ist, zumindest teilweise abhängig von den Unterstützungsinformationen.

Durch die Unterstützungsinformationen wird der Steuerungsvorrichtung beispielsweise mitgeteilt, welche Unterstützungsmaßnahmen verfügbar sind, wie schnell die Unterstützungsmaßnahme verfügbar ist, wo die Unterstützungsmaßnahme erfolgen kann und wie wirksam die Unterstützungsmaßnahme ist. Dies ist beispielsweise vorteilhaft, für das Bestimmen der Eignung einer Unterstützungsmaßnahme zum Abwehren der Gefährdung.

In beispielhaften Ausführungsformen der Erfindung erfolgt das Bestimmen, ob die erste Unterstützungsmaßnahme zum Abwehren der Gefährdung geeignet ist, gemäß einer oder mehreren vorgegebenen Regeln und/oder gemäß einem Algorithmus zur Mustererkennung und/oder gemäß einem Algorithmus zum maschinellen Lernen erfolgt.

Die vorgegebenen Regeln, können beispielsweise vorgeben, ob und unter welchen Bedingungen eine bestimmte Unterstützungsmaßnahme zum Abwehren einer bestimmten Art von Gefährdung geeignet ist. Neben der Art der Unterstützungsmaßnahme können dabei beispielsweise auch die Position der Unterstützungsvorrichtung und/oder der Zeitpunkt der ersten Unterstützungsmaßnahme berücksichtigt werden.

Bei der Mustererkennung handelt es sich beispielsweise ebenfalls um eine statistischer Mustererkennung, wie sie oben offenbart ist. Im Rahmen der Mustererkennung kann beispielsweise eine Wahrscheinlichkeit dafür bestimmt werden, dass die erste Unterstützungsmaßnahme die Wahrscheinlichkeit der Beschädigung und/oder der unberechtigten Verwendung des Schutzguts verringert. Ferner wird beispielsweise die Wahrscheinlichkeit dafür bestimmt, dass die erste Unterstützungsmaßnahme die Wahrscheinlichkeit der Beschädigung und/oder der unberechtigten Verwendung des Schutzguts nicht verringert. Zum Beispiel ergibt das Bestimmen, ob die erste Unterstützungsmaßnahme zum Abwehren der Gefährdung geeignet ist, nur dann, dass sie geeignet ist, wenn die Wahrscheinlichkeit dafür, dass die erste Unterstützungsmaßnahme die Wahrscheinlichkeit der Beschädigung und/oder der unberechtigten Verwendung des Schutzguts verringert, höher ist als die Wahrscheinlichkeit dafür, dass die erste Unterstützungsmaßnahme die Wahrscheinlichkeit der Beschädigung und/oder der unberechtigten Verwendung des Schutzguts nicht verringert.

Das maschinelle Lernen kann beispielsweise auch für das Bestimmen, ob die erste Unterstützungsmaßnahme zum Abwehren der Gefährdung geeignet ist, in Form eines überwachten maschinellen Lernens (engl. supervised machine learning) erfolgen, wie es oben offenbart ist.

In beispielhaften Ausführungsformen der Erfindung ist die erste Unterstützungsvorrichtung von der Steuerungsvorrichtung verschieden und/oder zumindest teilweise autonom.

Unter einer zumindest teilweisen autonomen Vorrichtung soll beispielsweise eine Vorrichtung verstanden werden, die sich zumindest teilweise selbststeuert.

Zum Beispiel ist eine Unterstützungsvorrichtung ein unbemanntes Fahrzeug, das sich zumindest teilweise autonom bewegen kann. Unter einem unbemannten Fahrzeug soll beispielsweise ein Luft-, Wasser- und/oder Landfahrzeug verstanden werden. Eine Unterstützungsvorrichtung in Form eines unbemannten Fahrzeugs ist beispielsweise ein mobiler Roboter (z.B. ein Lagerroboter) und/oder eine Drohne (z.B. eine Flugdrohen).

Eine Flugdrohne kann als Unterstützungsmaßnahme beispielsweise zum Ort der Gefährdung fliegen und mit einer Videokamera der Flugdrohne, einen möglichen Angreifer (z.B. Dieb oder Einbrecher) aus sicherer Höhe filmen und/oder identifizieren. Ein Lagerroboter kann als Unterstützungsmaßnahme beispielsweise einen möglichen Fluchtweg eines Angreifers blockieren und/oder eine Kommunikation eines Benutzers (z.B. eines Operators) mit dem Angreifer ermöglichen.

Es versteht sich, dass eine Unterstützungsvorrichtung auch ortsfest sein kann. Ein Beispiel für eine ortsfeste Unterstützungsvorrichtung ist eine schwenkbare Überwachungskamera, die eingerichtet ist, einen bestimmten Schwenkbereich selbsttätig zu überwachen und beim Erkennen von vorgegebenen Ereignissen, einen Alarm auszulösen. Ein anderes Beispiel für eine ortsfeste Unterstützungsvorrichtung ist ein zumindest teilweise autonomer Aktor eines Gebäudeautomatisierungssystems und/oder eines Alarmsystems wie eine automatische Lichtanlage (z.B. eine Lichtanlage, die sich selbsttätig zu vorgegebenen Uhrzeiten ein- und ausschaltet) oder eine automatische Tür (z.B. eine Feuerschutztür, die sich selbsttätig schließt, wenn ein Feuer erkannt wird).

Eine Lichtanlage kann als Unterstützungsmaßnahme beispielsweise das Licht in einem Gebäude auf die hellste Stufe stellen. Automatische Türen können als Unterstützungsmaßnahme zu fahren und den Rahmen mit roten LEDs einschalten, um "Feuerschutzmodus, permanent mit Sicherheitsbolzen verschlossen" zu signalisieren.

Weitere Beispiele für Unterstützungsvorrichtungen sind SmartLights, SmartCameras, Smartphones, SmartRingbells, SmartDoors, SmartElevators und Home Automation Systems.

In beispielhaften Ausführungsformen der Erfindung umfasst das Veranlassen der ersten Unterstützungsmaßnahme das Senden und/oder das Bewirken des Sendens einer Unterstützungsanforderungsnachricht an die erste Unterstützungsvorrichtung. Die Unterstützungsanforderungsnachricht ist beispielsweise eingerichtet, die erste Unterstützungsvorrichtung zu veranlassen, die erste Unterstützungsmaßnahme durchzuführen.

Die Unterstützungsanforderungsnachricht wird beispielsweise gemäß einer drahtlosen oder drahtgebundenen Kommunikationstechnik (z.B. gemäß der Kommunikationstechnik, mit der die Unterstützungsangebotsnachricht empfangen wurde) an die erste Unterstützungsvorrichtung gesendet. Das Senden der Unterstützungsanforderungsnachricht erfolgt beispielsweise durch eine drahtlose oder drahtgebundene Kommunikationsschnittstelle der Steuerungsvorrichtung. Unter dem Bewirken des Sendens der Unterstützungsanforderungsnachricht soll beispielsweise verstanden werden, dass eine drahtlose Kommunikationsschnittstelle angesteuert wird, die Unterstützungsanforderungsnachricht zu senden.

In beispielhaften Ausführungsformen der Erfindung enthält die Unterstützungsangebotsanfragenachricht und/oder die Unterstützungsanforderungsnachricht eine Unterstützungsautorisierungsinformation.

Die Unterstützungsautorisierungsinformation ist beispielsweise eingerichtet, eine Autorisierung der Steuerungsvorrichtung zum Anfordern einer Unterstützung nachzuweisen (z.B. gegenüber Unterstützungsvorrichtungen, die der gleichen Organisation und/oder dem gleichen Unternehmen wie die Steuerungsvorrichtung gehören und/oder davon betrieben werden). Eine Unterstützungsvorrichtung führt eine Unterstützungsmaßnahme beispielsweise nur dann aus, wenn die Steuerungsvorrichtung eine entsprechende Autorisierung nachweisen kann.

Zum Beispiel enthält die Unterstützungsautorisierungsinformation ein Unterstützungsautorisierungspasswort, ein Unterstützungsautorisierungscode und/oder einen Unterstützungsautorisierungsschlüssel.

In beispielhaften Ausführungsformen der Erfindung sind die Unterstützungsangebotsanfragenachricht und/oder die Unterstützungsangebotsnachricht und/oder die Unterstützungsanforderungsnachricht gemäß einem vordefinierten Protokoll gebildet.

In beispielhaften Ausführungsformen der Erfindung umfasst das Verfahren ferner Folgendes:
- Empfangen und/oder Bewirken des Empfangens zumindest einer zweiten Unterstützungsangebotsnachricht von einer zweiten Unterstützungsvorrichtung als Antwort auf die Unterstützungsangebotsanfragenachricht;
- Bestimmen zumindest teilweise abhängig von der empfangenen zweiten Unterstützungsangebotsnachricht, ob eine zweite Unterstützungsmaßnahme zum Abwehren der Gefährdung geeignet ist; und
- Veranlassen der zweiten Unterstützungsmaßnahme, wenn bestimmt wird, dass die zweite Unterstützungsmaßnahme zum Abwehren der Gefährdung geeignet ist.

Die zweite Unterstützungsangebotsnachricht ist von der ersten Unterstützungsangebotsnachricht verschieden, und die zweite Unterstützungsvorrichtung ist von der ersten Unterstützungsvorrichtung verschieden.

Das Empfangen und/oder das Bewirken des Empfangens der zweiten Unterstützungsangebotsnachricht, das Bestimmen, ob die zweite Unterstützungsmaßnahme zum Abwehren der Gefährdung geeignet ist, und das Veranlassen der zweiten Unterstützungsmaßnahme laufen beispielsweise entsprechend den oben für die erste Unterstützungsangebotsnachricht offenbarten Schritten ab. Dementsprechend sollen die Offenbarungen für die erste Unterstützungsangebotsnachricht entsprechend auch für die zweite Unterstützungsangebotsnachricht gelten.

In beispielhaften Ausführungsformen der Erfindung wird, wenn mehrere Unterstützungsangebotsnachrichten (z.B. die erste Unterstützungsangebotsnachricht und die zweite Unterstützungsangebotsnachricht) von verschiedenen Unterstützungsvorrichtungen (z.B. der ersten Unterstützungsvorrichtung und der zweiten Unterstützungsvorrichtung) als Antwort auf die Unterstützungsangebotsanfragenachricht empfangen werden und bestimmt wird, dass mehrere Unterstützungsmaßnahmen der verschiedenen Unterstützungsvorrichtungen geeignet zum Abwehren der Gefährdung sind, zumindest eine Unterstützungsmaßnahme der verschiedenen Unterstützungsvorrichtungen veranlasst.

Zum Beispiel wird für jede der Unterstützungsmaßnahmen bestimmt, ob die jeweilige Unterstützungsmaßnahme zum Abwehren der Gefährdung geeignet ist.

Zum Beispiel kann vorgesehen sein, dass zumindest die zum Abwehren der Gefährdung geeignetste Unterstützungsmaßnahme veranlasst wird. Zum Beispiel können die verschiedenen Unterstützungsmaßnahmen entsprechend ihrer Eignung zum Abwehren der Gefährdung gewichtet werden, so dass basierend auf der Gewichtung zumindest die zum Abwehren der Gefährdung geeignetste Unterstützungsmaßnahme bestimmt und veranlasst werden kann. Die Gewichtung wird beispielsweise als Ergebnis des Bestimmens, ob die jeweilige Unterstützungsmaßnahme zum Abwehren der Gefährdung geeignet ist, erhalten. Zum Beispiel entspricht die Gewichtung der Wahrscheinlichkeit, mit der die jeweilige Unterstützungsmaßnahme die Wahrscheinlichkeit der Beschädigung und/oder der unberechtigten Verwendung des Schutzguts verringert. Ferner können auch mögliche Kollateralschäden bei der Gewichtung berücksichtigt werden. Zum Beispiel kann von zwei Unterstützungsmaßnahmen, die beide die Wahrscheinlichkeit der Beschädigung und/oder der unberechtigten Verwendung des Schutzguts gleich verringern, die Unterstützungsmaßnahme höher gewichtet werden, die wahrscheinlich die geringeren Kollateralschäden bewirkt.

Es versteht sich, dass auch mehrere oder alle der verschiedenen Unterstützungsmaßnahmen veranlasst werden können. Zum Beispiel kann vorgegeben sein, dass alle Unterstützungsmaßnahmen oder alle Unterstützungsmaßnahmen mit einer bestimmten Mindestgewichtung veranlasst werden.

Dies beispielsweise vorteilhaft, um eine situationsabhängige und flexible Reaktion auf eine Gefährdung zu ermöglichen.

In beispielhaften Ausführungsformen der Erfindung umfasst das Verfahren ferner Folgendes:
- Speichern und/oder Veranlassen des Speicherns von Dokumentationsinformationen zum Dokumentieren der Gefährdung und/oder der Abwehr der Gefährdung.

Die Dokumentationsinformationen enthalten beispielsweise Sensorinformationen und/oder von einer oder mehreren Unterstützungsvorrichtungen empfangene Informationen. Zum Beispiel werden die Dokumentationsinformationen in einem Speicher der Steuerungsvorrichtung gespeichert.

In beispielhaften Ausführungsformen der Erfindung umfasst das Verfahren ferner Folgendes:
- Erhalten weiterer Sensorinformationen; und
- Bestimmen zumindest teilweise abhängig von den erhaltenen weiteren Sensorinformationen, ob die Gefährdung weiterhin besteht.

Zum Beispiel werden die weiteren Sensorinformationen nach dem Veranlassen der ersten Unterstützungsmaßnahme erhalten. Anhand dieser weiteren

Sensorinformationen kann der Erfolg der ersten Unterstützungsmaßnahme bestimmt werden.

Das Bestimmen zumindest teilweise abhängig von den erhaltenen weiteren Sensorinformationen, ob die Gefährdung weiterhin besteht, erfolgt beispielsweise entsprechend dem oben offenbarten Bestimmen zumindest teilweise abhängig von den erhaltenen Sensorinformationen, ob eine Gefährdung besteht. Wenn sich ergibt, dass die Gefährdung nicht mehr besteht, wird beispielsweise ein Stopp der ersten Unterstützungsmaßnahme veranlasst.

In beispielhaften Ausführungsformen der Erfindung ist die Steuerungsvorrichtung Teil eines unbemannten Fahrzeugs und/oder eines Gebäudeautomatisierungssystems und/oder eines Alarmsystems.

Die Steuerungsvorrichtung ist beispielsweise Teil eines unbemannten Fahrzeugs. Zum Beispiel ist die Steuerungsvorrichtung, eingerichtet ein solches unbemanntes Fahrzeug zumindest teilweise zu steuern. Unter einem unbemannten Fahrzeug soll beispielsweise ein Luft-, Wasser- und/oder Landfahrzeug verstanden werden, zum Beispiel ein Luft-, Wasser- und/oder Landfahrzeug, das Mittel zum Aufnehmen und/oder Transportieren einer oder mehrerer Sendungen umfasst und sich zumindest teilweise autonom bewegen kann. Zum Beispiel umfasst das unbemannte Fahrzeug zumindest ein durch eine Tür und/oder Klappe verschließbares Aufnahmefach zum Aufnehmen und Transportieren einer oder mehrerer Sendungen. Es versteht sich, dass das unbemannte Fahrzeug auch mehrere durch eine Tür und/oder Klappe verschließbare Aufnahmefächer zum Aufnehmen und Transportieren einer oder mehrerer Sendungen aufweisen kann. Eine Sendung ist beispielsweise ein Packstück, ein Stückgut, eine Paketsendung (z.B. ein Paket) und/oder eine Briefsendung (z.B. ein Brief). Die Tür und/oder Klappe verschließt beispielsweise eine Gehäuse- und/oder Karosserieöffnung des unbemannten Fahrzeugs, durch die ein Aufnahmefach des Fahrzeugs zugänglich ist. Ein unbemanntes Fahrzeug ist beispielsweise nicht zum Transport von Personen (z.B. weder zum Transport eines Fahrers noch von Passagieren) vorgesehen.

Alternativ oder zusätzlich kann die Steuerungsvorrichtung beispielsweise auch Teil eines Gebäudeautomatisierungssystems und/oder eines Alarmsystems sein. Zum Beispiel ist die Steuerungsvorrichtung, eingerichtet ein solches Gebäudeautomatisierungssystem und/oder Alarmsystem zumindest teilweise zu steuern.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Ins-besondere sollen Merkmale, die in den Figuren enthalten sind, keineswegs als not-wendiger Bestandteil der vorliegenden Erfindung erachtet werden.

### Es zeigen:

- Fig. 1: eine schematische Darstellung einer beispielhaften Ausführungsform einer erfindungsgemäßen Steuerungsvorrichtung;
- Fig. 2: eine schematische Darstellung einer beispielhaften Ausführungsform eines erfindungsgemäßen Systems;
- Fig. 3: ein Flussdiagramm eines Ausführungsbeispiels eines erfindungsgemäßen Verfahrens; und
- Fig. 4: beispielhafte Ausführungsformen von Speichermedien.

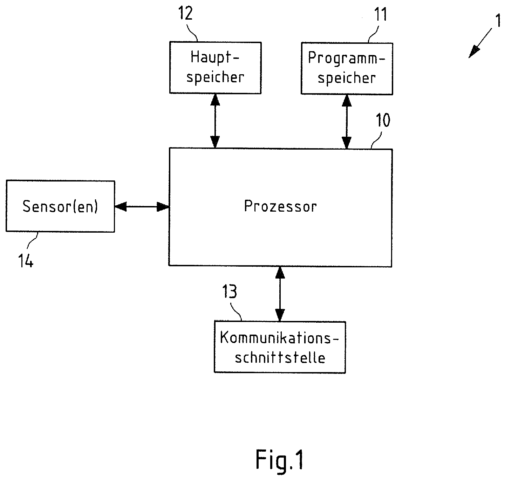

Fig. 1 ist eine schematische Darstellung einer beispielhaften Ausführungsform einer erfindungsgemäßen Steuerungsvorrichtung 1.

Die Steuerungsvorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12, eine drahtlose Kommunikationsschnittstelle 13 und einen oder mehrere Sensoren 14.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuerungsvorrichtung 1 auch mehrere Prozessoren 10 umfassen kann.

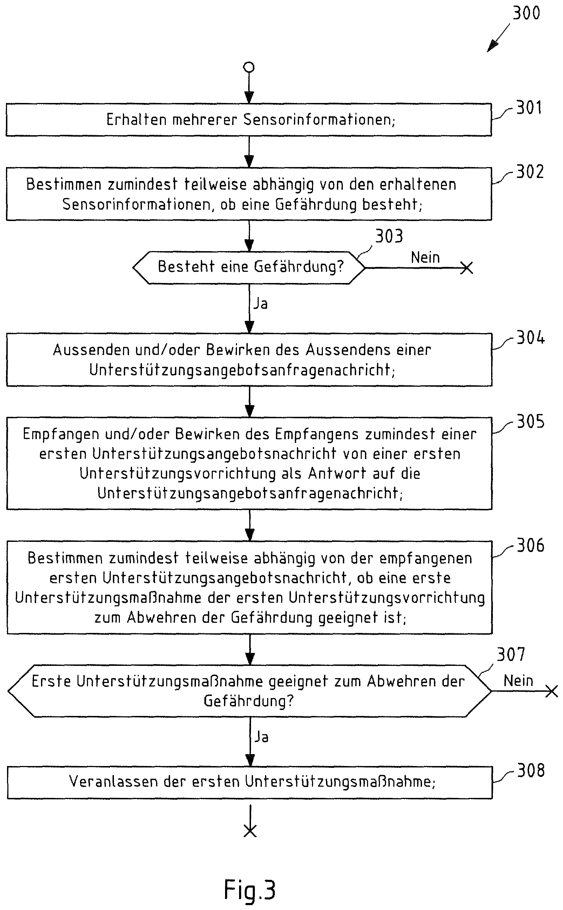

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines erfindungsgemäßen Computerprogramms, das Programmanweisungen umfasst, die den Prozessor 10 veranlassen, das erfindungsgemäße Verfahren (z.B. das Verfahren gemäß dem in Fig. 3 dargestellten Flussdiagram 300) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Steuerungsvorrichtung 1, das beim Starten der Steuerungsvorrichtung 1 zumindest teilweise in Hauptspeicher 12 geladen und vom Prozessor 10 ausgeführt wird. Insbesondere wird beim Starten der Steuerungsvorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuerungsvorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die drahtlose Kommunikationsschnittstelle 13, welche beispielsweise als WLAN-Schnittstelle ausgebildet ist.

Eine drahtlose Kommunikationsschnittstelle kann beispielsweise Informationen (über einen drahtlosen Kommunikationspfad) empfangen und an den Prozessor weiterleiten und/oder Informationen von dem Prozessor empfangen und (über einen drahtlosen Kommunikationspfad) senden. Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Senderempfängerschaltung.

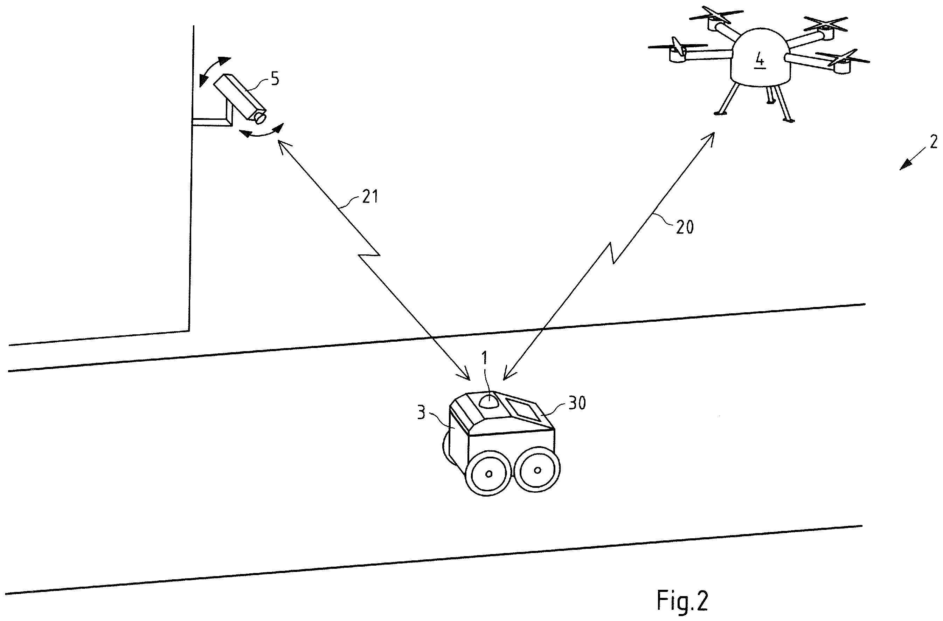

Die drahtlose Kommunikationsschnittstelle 13 ist beispielsweise eingerichtet zum Kommunizieren mit einer oder mehreren Unterstützungsvorrichtungen (z.B. der in Fig. 2 dargestellten Flugdrohne 4 und/oder Überwachungskamera 5).

Darüber hinaus weist Steuerungsvorrichtung 1 einen oder mehrere Sensoren 14 auf. Die Sensoren 14 sind zum Beispiel eingerichtet zum Erfassen einer Umgebungseigenschaften (z.B. eines Messwert einer an der Position des Sensors erfassbaren physikalischen oder chemischen Größe). Ferner sind die Sensoren 14 beispielsweise eingerichtet zum Bereitstellen von Sensorinformationen, die die durch die Sensoren 14 erfassten Umgebungseigenschaften repräsentieren. Diese Sensorinformationen stammen von den Sensoren 14 und können vom Prozessor 10 beispielsweise weiterverarbeitet werden.

Die Sensoren 14 umfassen beispielsweise einen oder mehrere der folgenden Sensoren: ein Temperatursensor (z.B. ein Thermometer, ein Thermoelement und/oder ein Thermowiderstand), ein Drucksensor, ein Helligkeitssensor, ein Bewegungssensor (z.B. ein Bewegungsmelder), ein akustischer Sensor (z.B. ein Mikrofon und/oder ein Geräuschsensor), ein Ultraschallsensor, ein optischer Sensor, ein Infrarotsensor, ein Lichtsensor (z.B. eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein chemischer Sensor (z.B. ein Gassensor), ein Glasbruchsensor, ein Bewegungssensor, ein Positionssensor (z.B. ein GPS-Sensor), ein Tür- und/oder Fenster-Öffnungssensor (z.B. ein Kontaktsensor), ein Fingerabdrucksensor und/oder ein Beschleunigungssensor.

Alternativ oder zusätzlich sind die Sensoren 14 zumindest teilweise extern zu der Steuerungsvorrichtung 1. In diesem Fall können die Sensorinformationen der externen Sensoren 14 beispielsweise durch die drahtlose Kommunikationsschnittstelle 13 (oder eine weitere drahtgebundene oder drahtlose Kommunikationsschnittstelle) empfangen werden.

Die Komponenten 10 bis 14 der Steuerungsvorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuerungsvorrichtung 1 neben den Komponenten 10 bis 14 weitere Komponenten (z.B. eine Benutzerschnittstelle und/oder eine weitere drahtgebundene oder drahtlose Kommunikationsschnittstelle) umfassen kann.

Fig. 2 zeigt eine schematische Darstellung einer Ausführungsform eines erfindungsgemäßen Systems 2.

Das System 2 umfasst ein unbemanntes Fahrzeug 3 und eine oder mehrere Unterstützungsvorrichtungen beispielsweise in Form der Flugdrohne 4 und/oder der Überwachungskamera 5.

In Fig. 2 ist die im Zusammenhang mit Fig. 1 offenbarte Steuerungsvorrichtung 1 beispielhaft als Teil eines unbemannten Fahrzeugs 3 dargestellt. Das unbemannte Fahrzeug 3 ist ein Landfahrzeug und weist ein mit einer Tür verschlossenes Aufnahmefach 30 auf. In dem Aufnahmefach 30 kann das unbemannte Fahrzeug 3 eine Sendung transportieren. Zum Beispiel handelt es sich bei dem unbemannten Fahrzeug 3 um eine Transportdrohne. Beispielsweise ist das unbemannte Fahrzeug eingerichtet zum zumindest teilweise autonomen Ausliefern einer Sendung. Die Steuerungsvorrichtung 1 ist beispielsweise eingerichtet, ein solches zumindest teilweise autonomes Ausliefern einer Sendung durch das unbemannten Fahrzeug zu steuern.

Die Flugdrohne 4 ist ein unbemanntes Luftfahrzeug und beispielsweise eingerichtet zum zumindest teilweise autonomen Ausliefern einer Sendung. Zum Beispiel handelt es sich bei der Flugdrohne 4 um einen Paketkopter.

Die Überwachungskamera 5 ist zum Beispiel eingerichtet, einen bestimmten Schwenkbereich selbsttätig zu überwachen und beim Erkennen von vorgegebenen Ereignissen, einen Alarm auszulösen (z.B. einen optischen und/oder akustischen Alarm an der Position der Überwachungskamera 5 und/oder in einer Überwachungszentrale).

Durch die drahtlose Kommunikationsschnittstelle 13 kann die Steuerungsvorrichtung 1 mit der Flugdrohne 4 und/oder der Überwachungskamera 5 kommunizieren. Die entsprechenden drahtlosen Kommunikationspfade sind in Fig. 2 mit den Bezugszeichen 20 und 21 versehen.

Fig. 3 zeigt ein Flussdiagramm mit Schritten einer beispielhaften Ausführungsform eines erfindungsgemäßen Verfahrens. Im Folgenden wird beispielhaft angenommen, dass die Schritte 301 bis 308 des Flussdiagramms 300 durch die Steuerungsvorrichtung 1, die Teil des unbemannten Fahrzeugs 3 in System 2 (vgl. Fig. 2) ist, ausgeführt werden.

In einem Schritt 301 werden mehrere Sensorinformationen an der Steuerungsvorrichtung 1 erhalten. Zum Beispiel repräsentieren die Sensorinformationen von den Sensoren 14 erfasste Umwelteigenschaften an der Position des unbemannten Fahrzeugs 3.

In einem Schritt 302 wird zumindest teilweise abhängig von den in Schritt 301 erhaltenen Sensorinformationen bestimmt, ob eine Gefährdung besteht.

Unter einer Gefährdung soll, wie oben offenbart, beispielweise verstanden werden, dass eine bestimmte Wahrscheinlichkeit (z.B. mehr als 50 %, vorzugsweise mehr als 75 %, besonders vorzugsweise mehr als 90 %) einer Beschädigung (z.B. einer Funktionszerstörung und/oder Funktionsbeeinträchtigung) und/oder einer unberechtigten Verwendung (z.B. eines Diebstahls) eines Schutzguts besteht.

Im Folgenden wird beispielhaft davon ausgegangen, dass das Schutzgut das unbemannte Fahrzeug 3 und/oder eine von dem unbemannten Fahrzeug 3 transportierte Sendung ist. Das Bestimmen in Schritt 302 ergibt dementsprechend beispielsweise das eine Gefährdung besteht, wenn sich aus den erhaltenen Sensorinformationen ergibt, dass eine bestimmte Wahrscheinlichkeit einer Beschädigung und/oder einer unberechtigten Verwendung des unbemannten Fahrzeugs 3 und/oder einer von dem unbemannten Fahrzeug 3 transportierten Sendung besteht.

Zum Beispiel kann das Bestimmen in Schritt 302 gemäß einer oder mehreren vorgegebenen Regeln erfolgen. Zum Beispiel sind entsprechende Regelinformationen, die die vorgegebenen Regeln repräsentieren, in Speicher 11 der Steuerungsvorrichtung gespeichert.

Die vorgegebenen Regeln, können beispielsweise für den Fall, dass bestimmte Sensorinformationen erhalten werden, vorgeben, dass eine Gefährdung besteht. Ferner können die Regeln vorgeben, welcher Art eine Gefährdung ist, wenn bestimmt wird, dass eine Gefährdung besteht. Zum Beispiel können die Regeln vorgeben, dass, wenn ein Türöffnungssensor anzeigt, dass die Tür des Aufnahmefachs 30 geöffnet wurde, ohne dass sich die Steuerungsvorrichtung an der Empfängeradresse befindet (z.B. erfasst durch einen Positionssensor) und/oder zuvor an der Steuerungsvorrichtung 1 ein Türöffnungsberechtigungscode (z.B. durch eine Eingabe auf einer Benutzerschnittstelle der Steuerungsvorrichtung) erhalten wurde, eine Gefährdung besteht und dass die Art der Gefährdung ein möglicher Diebstahl ist. Alternativ oder zusätzlich kann das Bestimmen in Schritt 302, wie oben offenbart, auch gemäß einem Algorithmus zur Mustererkennung und/oder gemäß einem Algorithmus zum maschinellen Lernen erfolgen.

Wenn bestimmt wird, dass eine Gefährdung besteht, wird das Flussdiagramm mit einem Schritt 304 fortgesetzt. Andernfalls wird das Flussdiagramm in einem Schritt 303 beispielsweise beendet oder mit Schritt 301 neu gestartet.

In Schritt 304 wird eine Unterstützungsangebotsanfragenachricht ausgesendet und/oder das Aussenden einer Unterstützungsangebotsanfragenachricht bewirkt. Zum Beispiel wird die Unterstützungsangebotsanfragenachricht durch die drahtlose Kommunikationsschnittstelle 13 in Form einer Broadcastnachricht ausgesendet.

Die Unterstützungsangebotsanfragenachricht ist beispielsweise eingerichtet, die Flugdrohne 4 und die Überwachungskamera 5 zu veranlassen, mögliche Unterstützungsmaßnahmen zum Abwehren der Gefährdung in Form einer Unterstützungsangebotsnachricht anzubieten, wenn sie die ausgesendete Unterstützungsangebotsanfragenachricht empfangen. Hierzu enthält die Unterstützungsangebotsanfragenachricht beispielsweise Gefährdungsinformationen, die indikativ für den Ort der Gefährdung, den Zeitpunkt der Gefährdung und/oder die Art der Gefährdung sind. Anhand der Gefährdungsinformationen können die Flugdrohne 4 und die Überwachungskamera 5 beispielsweise bestimmen, ob sie eine mögliche Unterstützungsmaßnahme zum Abwehren der Gefährdung anbieten können. Zum Beispiel kann vorgegeben sein, dass die Überwachungskamera 5 nur dann eine mögliche Unterstützungsmaßnahme anbieten soll, wenn der Ort der Gefährdung durch die Überwachungskamera 5 erfassbar ist.

In einem Schritt 305 wird zumindest eine erste Unterstützungsangebotsnachricht von einer ersten Unterstützungsvorrichtung als Antwort auf die Unterstützungsangebotsnachfragenachricht empfangen und/oder das Empfangen der ersten Unterstützungsangebotsnachricht bewirkt.

Zum Beispiel wird die erste Unterstützungsangebotsnachricht in Schritt 305 durch die drahtlose Kommunikationsschnittstelle 13 empfangen. Die erste Unterstützungsangebotsnachricht enthält beispielsweise Unterstützungsinformationen, die indikativ für die erste Unterstützungsmaßnahme der ersten Unterstützungsvorrichtung sind. Dabei soll unter der ersten Unterstützungsmaßnahme der ersten Unterstützungsvorrichtung beispielsweise eine durch die erste Unterstützungsvorrichtung durchführbare erste Unterstützungsmaßnahme verstanden werden.

Es versteht sich, dass neben der ersten Unterstützungsangebotsnachricht noch weitere Unterstützungsangebotsnachrichten als Antwort auf die Unterstützungsangebotsnachfragenachricht in Schritt 305 empfangen werden können.

Im Folgenden wird beispielhaft davon ausgegangen, dass in Schritt 305 eine erste Unterstützungsangebotsnachricht von der Flugdrohne 4 und eine zweite Unterstützungsangebotsnachricht von der Überwachungskamera 5 empfangen werden.

Die erste Unterstützungsangebotsnachricht von der Flugdrohne 4 enthält zum Beispiel Unterstützungsinformationen, die indikativ für eine mögliche Unterstützungsmaßnahme der Flugdrohne 4 sind. Zum Beispiel können diese Unterstützungsinformationen die aktuelle Position der Flugdrohne 4 und/oder die Art der möglichen Unterstützungsmaßnahme angeben. Die mögliche Unterstützungsmaßnahme der Flugdrohne 4 könnte zum Beispiel ein Schwebeflug über dem unbemannten Fahrzeug 3 und eine Videoüberwachung des unbemannten Fahrzeugs 3 aus der Schwebeflugposition sein. Dementsprechend könnte als Art dieser möglichen Unterstützungsmaßnahme beispielsweise mobile Videoüberwachung angegeben werden.

Die zweite Unterstützungsangebotsnachricht von der Überwachungskamera 5 kann beispielsweise Unterstützungsinformationen enthalten, die indikativ für eine mögliche Unterstützungsmaßnahme der Überwachungskamera sind. Zum Beispiel können diese Unterstützungsinformationen die Art der möglichen Unterstützungsmaßnahme angeben. Die mögliche Unterstützungsmaßnahme der Überwachungskamera 5 könnte zum Beispiel eine Videoüberwachung des unbemannten Fahrzeugs 3 und das Auslösen eines Alarms (z.B. einen optischen und/oder akustischen Alarm an der Position der Überwachungskamera 5 und/oder in einer Überwachungszentrale) sein. Dementsprechend könnte als Art dieser möglichen Unterstützungsmaßnahme beispielsweise ortsfeste Videoüberwachung und Alarm angegeben werden.

In einem Schritt 306 wird zumindest teilweise abhängig von der in Schritt 305 empfangenen ersten Unterstützungsangebotsnachricht bestimmt, ob eine erste Unterstützungsmaßnahme der ersten Unterstützungsvorrichtung zum Abwehren der Gefährdung geeignet ist. Das Bestimmen in Schritt 306 ergibt beispielsweise, dass die erste Unterstützungsmaßnahme zum Abwehren der Gefährdung geeignet ist, wenn durch die erste Unterstützungsmaßnahme die Wahrscheinlichkeit der Beschädigung und/oder der unberechtigten Verwendung das unbemannte Fahrzeug 3 und/oder einer von dem unbemannten Fahrzeug 3 transportierte Sendung verringert wird.

Zum Beispiel erfolgt das Bestimmen in Schritt 306 zumindest teilweise abhängig von in der ersten Unterstützungsangebotsnachricht enthaltenen Unterstützungsinformationen und gemäß einer oder mehreren vorgegebenen Regeln. Zum Beispiel sind entsprechende Regelinformationen, die die vorgegebenen Regeln repräsentieren, in Speicher 11 der Steuerungsvorrichtung 1 gespeichert.

Die vorgegebenen Regeln, können beispielsweise vorgeben, ob und unter welchen Bedingungen eine Unterstützungsmaßnahme zum Abwehren einer bestimmten Art von Gefährdung geeignet ist. Neben der Art der Unterstützungsmaßnahme können dabei beispielsweise auch die Position der Unterstützungsvorrichtung und/oder der Zeitpunkt der Unterstützungsmaßnahme berücksichtigt werden. Wenn die Art der Gefährdung ein möglicher Diebstahl ist, können diese Regeln beispielsweise vorgeben, dass sowohl eine Videoüberwachung als auch das Auslösen eines Alarms geeignete Unterstützungsmaßnahmen zum Abwehren der Bedrohung sind.

Alternativ oder zusätzlich kann das Bestimmen in Schritt 306, wie oben offenbart, auch gemäß einem Algorithmus zur Mustererkennung und/oder gemäß einem Algorithmus zum maschinellen Lernen erfolgen.

Es versteht sich, dass Schritt 306 für jede der in Schritt 305 empfangenen Unterstützungsangebotsnachrichten durchgeführt werden kann, wenn in Schritt 305 mehrere Unterstützungsangebotsnachrichten empfangen wurden. Ferner können in diesem Fall die verschiedenen Unterstützungsmaßnahmen in Schritt 306 auch entsprechend ihrer Eignung zum Abwehren der Gefährdung gewichtet werden, so dass basierend auf der Gewichtung zumindest die zum Abwehren der Gefährdung geeignetste Unterstützungsmaßnahme bestimmt werden kann. Die Gewichtung wird beispielsweise als Ergebnis des Bestimmens, ob die jeweilige Unterstützungsmaßnahme zum Abwehren der Gefährdung geeignet ist, erhalten. Zum Beispiel entspricht die Gewichtung der Wahrscheinlichkeit, mit der die jeweilige Unterstützungsmaßnahme die Wahrscheinlichkeit der Beschädigung und/oder der unberechtigten Verwendung des Schutzguts verringert.

Für das oben offenbarte Beispiel, dass in Schritt 305 eine erste Unterstützungsangebotsnachricht von der Flugdrohne 4 und eine zweite Unterstützungsangebotsnachricht von der Überwachungskamera 5 empfangen werden, wird in Schritt 306 beispielsweise bestimmt, dass sowohl die mögliche Unterstützungsmaßnahme der Flugdrohne 4 (d.h. ein Schwebeflug über dem unbemannten Fahrzeug 3 und eine Videoüberwachung des unbemannten Fahrzeugs 3) als auch die mögliche Unterstützungsmaßnahme der Überwachungskamera 5 (d.h. eine Videoüberwachung des unbemannten Fahrzeugs 3 und das Auslösen eines Alarms) geeignet zum Abwehren der Gefährdung (z.B. eines möglichen Diebstahls) sind.

Wenn bestimmt wird, dass die erste Unterstützungsmaßnahme (z.B. eine der verschiedenen Unterstützungsmaßnahmen, wenn in Schritt 305 mehrere Unterstützungsangebotsnachrichten empfangen wurden) geeignet ist zum Abwehren der Gefährdung, wird das Flussdiagramm mit einem Schritt 308 fortgesetzt. Andernfalls wird das Flussdiagramm in Schritt 307 beispielsweise beendet oder mit Schritt 301 neugestartet.

In Schritt 308 wird die erste Unterstützungsmaßnahme veranlasst. Es versteht sich, dass in Schritt 308 auch mehrere oder alle der verschiedenen Unterstützungsmaßnahmen veranlasst werden können, wenn in Schritt 305 mehrere Unterstützungsangebotsnachrichten empfangen wurden. Zum Beispiel kann vorgegeben sein, dass alle Unterstützungsmaßnahmen oder alle Unterstützungsmaßnahmen mit einer bestimmten Mindestgewichtung veranlasst werden, wenn die Unterstützungsmaßnahmen in Schritt 306 gewichtet werden.

Unter dem Veranlassen einer Unterstützungsmaßnahme soll beispielsweise verstanden werden, dass die Steuerungsvorrichtung 1 eine Unterstützungsvorrichtung veranlasst, diese Unterstützungsmaßnahme durchzuführen. Zum Beispiel kann die Steuerungsvorrichtung 1 an die Unterstützungsvorrichtung eine Unterstützungsanforderungsnachricht senden, die eingerichtet ist, die Unterstützungsvorrichtung zu veranlassen, diese Unterstützungsmaßnahme durchzuführen.

Wie oben offenbart, kann eine Unterstützungsanforderungsnachricht eine Unterstützungsautorisierungsinformation enthalten, die eingerichtet ist, eine Autorisierung der Steuerungsvorrichtung 1 zum Anfordern einer Unterstützung nachzuweisen (z.B. gegenüber Unterstützungsvorrichtungen, die der gleichen Organisation und/oder dem gleichen Unternehmen wie die Steuerungsvorrichtung gehören und/oder davon betrieben werden). Eine Unterstützungsvorrichtung führt eine Unterstützungsmaßnahme beispielsweise nur dann aus, wenn die Steuerungsvorrichtung 1 eine entsprechende Autorisierung nachweisen kann.

Für das oben offenbarte Beispiel, dass in Schritt 305 eine erste Unterstützungsangebotsnachricht von der Flugdrohne 4 und eine zweite Unterstützungsangebotsnachricht von der Überwachungskamera 5 empfangen werden, wird in Schritt 308 beispielsweise eine Unterstützungsanforderungsnachricht an die Flugdrohne 4 gesendet, um die Unterstützungsmaßnahme der Flugdrohne 4 (d.h. ein Schwebeflug über dem unbemannten Fahrzeug 3 und eine Videoüberwachung des unbemannten Fahrzeugs 3) zu veranlassen, und eine Unterstützungsanforderungsnachricht an die Überwachungskamera 5 gesendet, um die Unterstützungsmaßnahme der Überwachungskamera 5 (d.h. eine Videoüberwachung des unbemannten Fahrzeugs 3 und das Auslösen eines Alarms) zu veranlassen.

In einem optionalen weiteren Schritt können weitere Sensorinformationen erhalten und zumindest teilweise abhängig von diesen weiteren Sensorinformationen bestimmt werden, ob die Gefährdung weiterhin besteht. Wenn sich ergibt, dass die Gefährdung nicht mehr besteht, wird beispielsweise ein Stopp der in Schritt 308 veranlassten Unterstützungsmaßnahme(n) veranlasst. Andernfalls wird beispielsweise Schritt 304 wiederholt, um ggfs. weitere Unterstützungsmaßnahmen veranlassen zu können.

Ferner kann vorgesehen sein, dass Dokumentationsinformationen zum Dokumentieren der Gefährdung und/oder der Abwehr der Gefährdung in Speicher 11 der Steuerungsvorrichtung 1 gespeichert werden. Die Dokumentationsinformationen enthalten beispielsweise von den Sensoren 14 erhaltene Sensorinformationen und/oder von einer oder mehreren Unterstützungsvorrichtungen empfangene Informationen (z.B. Videoüberwachungsinformationen der Flugdrohne 4 und der Überwachungskamera 5).

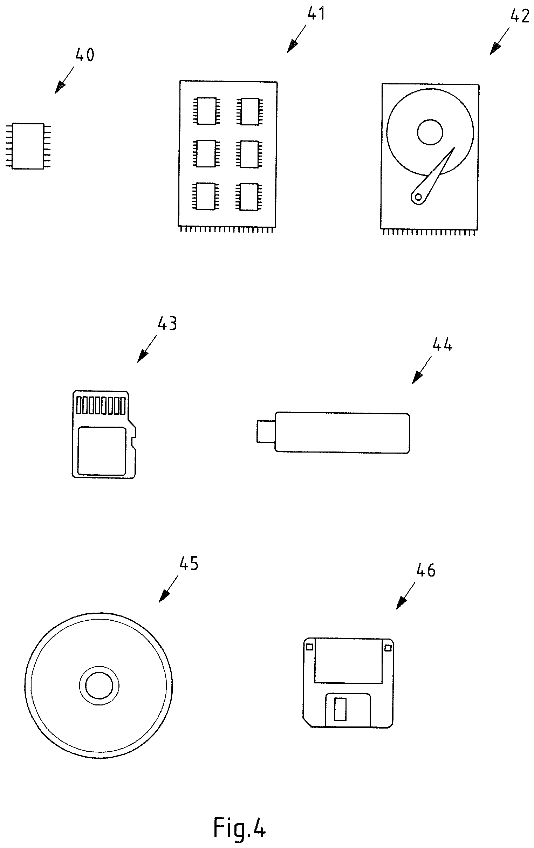

Fig. 4 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 10 der Fig. 1) sein, beispielsweise ein (nicht-flüchtiger oder flüchtiger) Programmspeicher des Prozessors oder ein Teil davon (z.B. Speicher 11 in Fig. 1). Ausführungsbeispiele eines Speichermediums sind ein Flash-Speicher 40, eine SSD-Festplatte 41, eine magnetische Festplatte 42, eine Speicherkarte 43, ein Memory Stick 44 (z.B. ein USB-Stick), eine CD-ROM oder DVD 45 oder eine Diskette 46.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Abwehren einer Gefährdung und/oder zum Veranlassen des Abwehrens einer Gefährdung, wobei das Verfahren von einer Steuerungsvorrichtung (1) ausgeführt wird, und wobei das Verfahren umfasst:
- Erhalten (301) mehrerer Sensorinformationen;
- Bestimmen (302) zumindest teilweise abhängig von den erhaltenen Sensorinformationen, ob eine Gefährdung besteht;
- Aussenden und/oder Bewirken des Aussendens (303-304) einer Unterstützungsangebotsanfragenachricht, wenn bestimmt wird, dass die Gefährdung besteht;
- Empfangen und/oder Bewirken des Empfangens (305) zumindest einer ersten Unterstützungsangebotsnachricht von einer ersten Unterstützungsvorrichtung (4, 5) als Antwort auf die Unterstützungsangebotsanfragenachricht;
- Bestimmen (306) zumindest teilweise abhängig von der empfangenen ersten Unterstützungsangebotsnachricht, ob eine erste Unterstützungsmaßnahme der ersten Unterstützungsvorrichtung (4, 5) zum Abwehren der Gefährdung geeignet ist; und
- Veranlassen (307-308) der ersten Unterstützungsmaßnahme, wenn bestimmt wird, dass die erste Unterstützungsmaßnahme zum Abwehren der Gefährdung geeignet ist.

2. Verfahren nach Anspruch 1, wobei das Bestimmen (302), ob eine Gefährdung besteht, gemäß einer oder mehreren vorgegebenen Regeln und/oder gemäß einem Algorithmus zur Mustererkennung und/oder gemäß einem Algorithmus zum maschinellen Lernen erfolgt.

3. Verfahren nach einem der Ansprüche 1 bis 2, wobei die
Unterstützungsangebotsanfragenachricht Gefährdungsinformationen zur Gefährdung, insbesondere zum Ort der Gefährdung, zum Zeitpunkt der Gefährdung und/oder zur Art der Gefährdung, enthält.

4. Verfahren nach einem der Ansprüche 1 bis 3, wobei die
Unterstützungsangebotsnachricht Unterstützungsinformationen zu einer möglichen Unterstützungsmaßnahme der ersten Unterstützungsvorrichtung (4, 5), insbesondere zur Position der ersten Unterstützungsvorrichtung (4, 5), zum Zeitpunkt der Unterstützungsmaßnahme und/oder zur Art der Unterstützungsmaßnahme, enthält.

5. Verfahren nach einem der Ansprüche 1 bis 4, wobei das Bestimmen (306), ob die erste Unterstützungsmaßnahme zum Abwehren der Gefährdung geeignet ist, gemäß einer oder mehreren vorgegebenen Regeln und/oder gemäß einem Algorithmus zur Mustererkennung und/oder gemäß einem Algorithmus zum maschinellen Lernen erfolgt.

6. Verfahren nach einem der Ansprüche 1 bis 5, wobei die erste Unterstützungsvorrichtung (4,5) von der Steuerungsvorrichtung (1) verschieden und/oder zumindest teilweise autonom ist.

7. Verfahren nach einem der Ansprüche 1 bis 6, wobei das Veranlassen der ersten Unterstützungsmaßnahme das Senden oder das Bewirken des Sendens einer Unterstützungsanforderungsnachricht an die erste Unterstützungsvorrichtung (4, 5) umfasst.

8. Verfahren nach Anspruch 7, wobei die Unterstützungsangebotsanfragenachricht und/oder die Unterstützungsanforderungsnachricht eine Unterstützungsautorisierungsinformation enthält.

9. Verfahren nach einem der Ansprüche 1 bis 8, wobei das Verfahren umfasst:
- Empfangen und/oder Bewirken des Empfangens zumindest einer zweiten Unterstützungsangebotsnachricht von einer zweiten Unterstützungsvorrichtung (4, 5) als Antwort auf die Unterstützungsangebotsanfragenachricht;
- Bestimmen zumindest teilweise abhängig von der empfangenen zweiten Unterstützungsangebotsnachricht, ob eine zweite Unterstützungsmaßnahme der zweiten Unterstützungsvorrichtung (4, 5) zum Abwehren der Gefährdung geeignet ist; und
- Veranlassen der zweiten Unterstützungsmaßnahme, wenn bestimmt wird, dass die zweite Unterstützungsmaßnahme zum Abwehren der Gefährdung geeignet ist.

10. Verfahren nach einem der Ansprüche 1 bis 9, wobei, wenn mehrere Unterstützungsangebotsnachrichten von verschiedenen Unterstützungsvorrichtungen (4, 5) als Antwort auf die Unterstützungsangebotsanfragenachricht empfangen werden und bestimmt wird, dass mehrere Unterstützungsmaßnahmen der verschiedenen Unterstützungsvorrichtungen (4, 5) geeignet zum Abwehren der Gefährdung sind, zumindest eine Unterstützungsmaßnahme der verschiedenen Unterstützungsvorrichtungen (4, 5) veranlasst wird.

11. Verfahren nach einem der Ansprüche 1 bis 10, wobei das Verfahren ferner umfasst:
- Speichern und/oder Veranlassen des Speicherns von Dokumentationsinformationen zum Dokumentieren der Gefährdung und/oder der Abwehr der Gefährdung.

12. Verfahren nach einem der Ansprüche 1 bis 11, wobei das Verfahren ferner umfasst:
- Erhalten weiterer Sensorinformationen; und
- Bestimmen zumindest teilweise abhängig von den erhaltenen weiteren Sensorinformationen, ob die Gefährdung weiterhin besteht.

13. Computerprogramm, umfassend Programmanweisungen, die dazu ausgebildet sind, bei Ausführung durch mindestens einen Prozessor (10) eine Vorrichtung (1) zu veranlassen, das Verfahren gemäß einem der Ansprüche 1 bis 12 auszuführen.

14. Steuerungsvorrichtung, umfassend:
- Mittel (10-14) eingerichtet zur Ausführung des Verfahrens nach einem der Ansprüche 1 bis 12.

15. System, umfassend:
- zumindest eine Steuerungsvorrichtung (1) nach Anspruch 14;
- eine oder mehrere Unterstützungsvorrichtungen (4,5).

## Claims

1. Method for averting a danger and/or for prompting the averting of a danger, wherein the method is performed by a control apparatus (1), and wherein the method comprises:
- obtaining (301) a plurality of pieces of sensor information;
- determining (302), at least partially depending on the obtained pieces of sensor information, whether a danger exists;
- transmitting and/or causing the transmitting (303-304) of a support offer request message if it is determined that the danger exists;
- receiving and/or causing the receiving (305) of at least one first support offer message from a first support apparatus (4, 5) in response to the support offer request message;
- determining (306), at least partially depending on the received first support offer message, whether a first support measure of the first support apparatus (4, 5) is suitable for averting the danger; and
- prompting (307-308) the first support measure if it is determined that the first support measure is suitable for averting the danger.

2. Method according to Claim 1, wherein the determining (302) whether a danger exists is carried out according to one or more predetermined rules and/or according to a pattern recognition algorithm and/or according to a machine learning algorithm.

3. Method according to one of Claims 1 to 2, wherein the support offer request message contains pieces of danger information relating to the danger, in particular relating to the location of the danger, the time of the danger and/or the type of danger.

4. Method according to one of Claims 1 to 3, wherein the support offer message contains pieces of support information relating to a possible support measure of the first support apparatus (4, 5), in particular relating to the position of the first support apparatus (4, 5), the time of the support measure and/or the type of support measure.

5. Method according to one of Claims 1 to 4, wherein the determining (306) whether the first support measure is suitable for averting the danger is carried out according to one or more predetermined rules and/or according to a pattern recognition algorithm and/or according to a machine learning algorithm.

6. Method according to one of Claims 1 to 5, wherein the first support apparatus (4, 5) is different from the control apparatus (1) and/or is at least partially autonomous.

7. Method according to one of Claims 1 to 6, wherein the prompting of the first support measure comprises transmitting or causing the transmitting of a support request message to the first support apparatus (4, 5).

8. Method according to Claim 7, wherein the support offer request message and/or the support request message contains support authorization information.

9. Method according to one of Claims 1 to 8, wherein the method comprises:
- receiving and/or causing the receiving of at least one second support offer message from a second support apparatus (4, 5) in response to the support offer request message;
- determining, at least partially depending on the received second support offer message, whether a second support measure of the second support apparatus (4, 5) is suitable for averting the danger; and
- prompting the second support measure if it is determined that the second support measure is suitable for averting the danger.

10. Method according to one of Claims 1 to 9, wherein, if a plurality of support offer messages are received from different support apparatuses (4, 5) in response to the support offer request message and if it is determined that a plurality of support measures of the various support apparatuses (4, 5) are suitable for averting the danger, at least one support measure of the various support apparatuses (4, 5) is prompted.

11. Method according to one of Claims 1 to 10, wherein the method further comprises:
- storing and/or prompting the storing of pieces of documentation information for documenting the danger and/or the averting of the danger.

12. Method according to one of Claims 1 to 11, wherein the method further comprises:
- obtaining further pieces of sensor information; and
- determining, at least partially depending on the obtained further pieces of sensor information, whether the danger still exists.

13. Computer program comprising program instructions which are configured, when executed by at least one processor (10), to cause an apparatus (1) to perform the method according to one of Claims 1 to 12.

14. Control apparatus comprising:
- means (10-14) configured to perform the method according to one of Claims 1 to 12.

15. System comprising:
- at least one control apparatus (1) according to Claim 14;
- one or more support apparatuses (4, 5).

## Revendications

1. Procédé de prévention d'une menace et/ou de déclenchement de la prévention d'une menace, dans lequel le procédé est exécuté par un dispositif de commande (1), et dans lequel le procédé comprend :
- l'obtention (301) de plusieurs informations de capteur ;
- le fait de déterminer (302), au moins en partie en fonction des informations de capteur obtenues, s'il existe une menace ;
- l'envoi et/ou le déclenchement de l'envoi (303 - 304) d'un message de demande d'offre d'assistance quand il est déterminé que la menace existe ;
- la réception et/ou le déclenchement de la réception (305) au moins d'un premier message d'offre d'assistance par un premier dispositif d'assistance (4, 5) en réponse au message de demande d'offre d'assistance ;
- le fait de déterminer (306) au moins en partie en fonction du premier message d'offre d'assistance reçu si une première mesure d'assistance du premier dispositif d'assistance (4, 5) est adaptée pour prévenir la menace ; et
- le déclenchement (307 - 308) de la première mesure d'assistance, quand il est déterminé que la première mesure d'assistance est adaptée pour prévenir la menace.

2. Procédé selon la revendication 1, dans lequel le fait de déterminer (302) si une menace existe est effectué selon une ou plusieurs règles prédéfinies et/ou selon un algorithme d'identification de modèles et/ou selon un algorithme d'apprentissage automatique.

3. Procédé selon l'une quelconque des revendications 1 à 2, dans lequel le message de demande d'offre d'assistance contient des informations de menace concernant la menace, en particulier concernant l'emplacement de la menace, concernant le moment de la menace et/ou concernant le type de la menace.

4. Procédé selon l'une quelconque des revendications 1 à 3, dans lequel le message d'offre d'assistance contient des informations d'assistance concernant une mesure d'assistance possible du premier dispositif d'assistance (4, 5), en particulier concernant la position du premier dispositif d'assistance (4, 5), concernant le moment de la mesure d'assistance et/ou concernant le type de la mesure d'assistance.

5. Procédé selon l'une quelconque des revendications 1 à 4, dans lequel le fait de déterminer (306) si la première mesure d'assistance est adaptée pour prévenir la menace est effectué selon une ou plusieurs règles prédéfinies et/ou selon un algorithme d'identification de modèles et/ou selon un algorithme d'apprentissage automatique.

6. Procédé selon l'une quelconque des revendications 1 à 5, dans lequel le premier dispositif d'assistance (4, 5) est différent du dispositif de commande (1) et/ou est au moins en partie autonome.

7. Procédé selon l'une quelconque des revendications 1 à 6, dans lequel le déclenchement de la première mesure d'assistance comprend l'envoi ou le déclenchement de l'envoi d'un message de demande d'assistance au premier dispositif d'assistance (4, 5).

8. Procédé selon la revendication 7, dans lequel le message de demande d'offre d'assistance et/ou le message de demande d'assistance contiennent une information d'autorisation d'assistance.

9. Procédé selon l'une quelconque des revendications 1 à 8, dans lequel le procédé comprend :
- la réception et/ou le déclenchement de la réception d'au moins un deuxième message d'offre d'assistance par un deuxième dispositif d'assistance (4, 5) en tant que réponse au message de demande d'offre d'assistance ;
- le fait de déterminer au moins en partie en fonction du deuxième message d'offre d'assistance reçu si une deuxième mesure d'assistance du deuxième dispositif d'assistance (4, 5) est adaptée pour prévenir la menace ; et
- le déclenchement de la deuxième mesure d'assistance quand il est déterminé que la deuxième mesure d'assistance est adaptée pour prévenir la menace.

10. Procédé selon l'une quelconque des revendications 1 à 9, dans lequel, quand plusieurs messages d'offre d'assistance sont reçus par différents dispositifs d'assistance (4, 5) en réponse au message de demande d'offre d'assistance et qu'il est déterminé que plusieurs mesures d'assistance des différents dispositifs d'assistance (4, 5) sont adaptées pour prévenir la menace, au moins une mesure d'assistance des différents dispositifs d'assistance (4, 5) est déclenchée.

11. Procédé selon l'une quelconque des revendications 1 à 10, dans lequel le procédé comprend en outre :
- la mémorisation et/ou le déclenchement de la mémorisation d'informations de documentation pour documenter la menace et/ou la prévention de la menace.

12. Procédé selon l'une quelconque des revendications 1 à 11, dans lequel le procédé comprend en outre :
- l'obtention d'autres informations de capteur ; et
- le fait de déterminer au moins en partie en fonction d'autres informations de capteur obtenues si la menace continue à exister.

13. Programme informatique comprenant des instructions de programme, qui sont réalisées pour déclencher un dispositif (1) lors de l'exécution par au moins un processeur (10), pour exécuter le procédé selon l'une quelconque des revendications 1 à 12.

14. Dispositif de commande, comprenant :
- des moyens (10 - 14) mis au point pour exécuter le procédé selon l'une quelconque des revendications 1 à 12.

15. Système comprenant :
- au moins un dispositif de commande (1) selon la revendication 14 ;
- un ou plusieurs dispositifs d'assistance (4, 5).
